# EUROPEAN PATENT SPECIFICATION

(11) **EP 1 365 905 B1**
(45) Date of publication and mention of the grant of the patent: **31.08.2005**
(21) Application number: 02711538.5
(22) Date of filing: 06.02.2002
(51) Int. Cl.: B29C 45/26, B29C 45/76, B29C 45/66

(54) **METHOD AND INSTALLATION FOR INJECTION MOULDING A PLASTIC ARTICLE**
VERFAHREN UND ANLAGE ZUM SPRITZGIESSEN EINES KUNSTSTOFFGEGENSTANDS
PROCEDE ET INSTALLATION POUR LE MOULAGE PAR INJECTION D'UN ARTICLE EN PLASTIQUE

(30) Priority: 06.02.2001 NL 1017287
(43) Date of publication of application: 03.12.2003
(73) Proprietor: Singulus Technologies AG, 63796 Kahl/Main (DE)
(72) Inventor: KOK, Ronaldus, Johannes, Cornelis, Maria, NL-5613 BE Eindhoven (NL); HOMPUS, Michael, Adrianus, Theodorus, NL-5701 AJ Helmond (NL); EVERS, Marinus, Franciscus, Johannes, NL-5665 GT Geldrop (NL)
(74) Representative: Vossius & Partner
(86) International application number: PCT/NL2002/000086
(87) International publication number: WO 2002/062554

(56) References cited:
- EP-A- 0 220 725
- WO-A-01/87569
- DE-A- 4 329 070
- US-A- 5 720 994
- PATENT ABSTRACTS OF JAPAN vol. 2000, no. 03, 30 March 2000 (2000-03-30) -& JP 11 353720 A (DAINIPPON PRINTING CO LTD), 24 December 1999 (1999-12-24)
- PATENT ABSTRACTS OF JAPAN vol. 2000, no. 01, 31 January 2000 (2000-01-31) -& JP 11 291307 A (TEIJIN LTD), 26 October 1999 (1999-10-26)

## Description

The invention relates to the injection moulding of plastic articles, for example information carriers such as CDs and DVDs, but also other products such as lenses. In the case of CDs and DVDs a plastic disc is used which contains a spiral track of small pits, in which the information concerned is stored, for example for reproducing sound, image or software in general.

The quality of the track of miniscule pits is extremely important for the reliable reproduction of the stored information. In the production of such an information carrier hot, fluid plastic is injected into a mould under high pressure. The mould contains a master disc containing the negative of the track in the end product. Relatively high pressures are used in order to be able to reproduce in the plastic, in the correct manner, even those parts of the track that are the greatest distance away from the injection opening of the mould.

The mould and in particular the installation in which the mould is accommodated must be able to withstand the high pressures. In this connection it has always been assumed that the mould parts from which the mould is made up must be held pressed onto one another under very high prestressing. This prestressing is usually supplied by powerful hydraulic piston/cylinder devices. However, the forces generated in the installation by these piston/cylinder devices under a hydraulic pressure of about 300 bar are so high that, despite the heavyweight construction of the installation, appreciable deformations arise.

Moreover, it has been found that the high prestressing does not always meet the requirement to keep the mould parts reliably pressed onto one another when injecting the plastic under high pressure.

The mould parts can nevertheless still be moved away from one another for a short time, which phenomenon in turn has to be compensated for in some other way. Consequently, fairly large variations in the quality of the product produced must be accepted. This means that, despite the heavy and expensive installation that is usually used, an optimum production process cannot be achieved.

JP-A-11-353720 and JP-A-11-291307 disclose a method and an apparatus for injection moulding according to the preambles of claims 1 and 16, respectively.

The aim of the invention is first of all to provide a method by means of which rational production is made possible and the products obtained have a more constant quality and fall within narrow tolerances. This object is achieved with the features of the claims.

With the method according to the invention, an article of the desired thickness is obtained. Furthermore, holding the mould parts clamped onto one another under very high prestressing is dispensed with. Instead of this the mould parts are held in the desired position by positioning means. With this arrangement the mould parts can indeed be in contact with one another, possibly with some prestressing. It is also conceivable to position the mould parts with some mutual play with respect to one another, in which case timely curtailment of the feed must then be taken into account during injection.

Although the hot, molten plastic is injected under high pressure, for example a pressure of 200.10⁵ N/m², even with the method according to the invention, the pressure falls as the plastic flows out between the mould parts. Normal atmospheric pressure prevails at the "front" of the plastic flowing out, such that the degree of filling is readily controllable even when the mould parts are not completely closed.

Since the mould parts are held accurately with respect to one another, their position with respect to one another can also be adjusted during or immediately following injection. This can be desirable, for example, in connection with compensation, for shrinkage of the cooling plastic material.

Such an embodiment of the method can in particular be used in the production of information carriers, In this context the invention therefore relates to the injection moulding of an information carrier for a CD or DVD, comprising the provision of a mould, one mould half of which contains a master disc containing a spiral track for forming a corresponding mirror-image track in the information carrier, as well as the step for moving the mould parts a short distance, for example approximately 120 nm, towards one another during or after injecting the plastic material into the mould cavity.

Moving the mould parts towards one another over a very small distance is sufficient to ensure that the projections on the master disc are pressed well into the plastic material.

The master disc, which usually is made of nickel, is accommodated in the mould. The thickness dimensions of this master disc therefore also have an influence on the dimensions of the product produced therewith. Any irregularities in the dimensions of the master disc can be compensated for by the positioning means.

The installation can be adjusted during production should this be necessary. In this context, the method according to the invention includes, as already mentioned above, influencing the positioning means as a function of the result of at least one thickness measurement of an article injection moulded in a previous cycle.

With this procedure, the thickness can optionally be measured in several locations, in order to produce an article of uniform thickness. Such a thickness measurement makes it possible to detect any deviations in the shape of the product, such as a wedge shape, convex shape, dish shape or lens shape, and then to compensate for these by adjusting the positioning means. This compensation can be effected on the basis of the measurement of a product produced immediately beforehand. However, the compensation can also be carried out on the basis of a mean of a series of previous measurements, such as a progressive mean.

The measurement of the deviations can also be carried out in various ways. For instance, the thickness can be measured on the basis of a set of locations on the product that are located on a predetermined line.

An even better result can be obtained if, in addition, the thickness of the article is measured in at least a second set of locations that are located on a predetermined second line that differs from the first line.

Preferably, the measurement positions are on two parallel straight lines; as an alternative, the lines can be curved.

A good procedure for carrying out the thickness measurement is to select four measurement points, one of which is in the middle of the product, with three arranged around this, preferably regularly distributed around the middle measurement point. The measurement points can also be located on an imaginary cross that runs through the middle of the product

The thickness measurement can be carried out directly in the production line and processed automatically. As an alternative, the thickness measurement can also be carried out subsequently, after which the installation settings can be adjusted manually.

Incidentally, variations in thickness in the products produced can also be caused by gravity, the mechanical settings of the installation, sizing, thermal effects and the like.

The installation for injection moulding a plastic article, such as for a CD or a DVD, according to claim 16 may be used for carrying out the claimed method.

The positioning means preferably comprise screw actuators, each of which can be driven by its own motor. Such screw actuators offer the possibility of holding the mould parts in a reliable and stable manner against the pressure of the injected plastic material. Very fine adjustment movements can also be carried out by means of these actuators, especially if the pitch is smalL The drive is preferably effected by means of servomotors.

Each screw actuator has a screw spindle that, by means of a bearing, is supported in a block such that it can turn, which block supports one of the mould parts and in which block the mould cavity is also located, as well as a channel for feeding hot, molten plastic. Furthermore, each screw actuator has a nut that is connected to a yoke, which yoke supports the other mould part in such a way that said other mould part can be moved towards and away from the mould part in the block by operating the screw actuators.

The block, which, for example, is made of steel, provides a dimensionally and structurally stable support for the mould and the screw actuators. In combination with the absence of high internal prestressing, this yields a relatively simple, reliable construction.

In this context it is furthermore important that the block contains a cavity in which the one mould part is located and in which the other mould part can be moved in a tightly fitting manner by means of the screw actuators. Each nut is movably supported in the block by means of a linear bearing.

The nuts are each connected to a column on which the linear bearing engages and each column is fixed to the yoke.

Further embodiments of the invention are defined in the dependent claims.

The invention will be explained in more detail below with reference to the installation shown in the figures for carrying out the method according to the invention.
Figure 1 shows a section through the installation in accordance with I-I in Figure 2.
Figure 2 shows an end view.
Figure 3 shows a detail of the mould cavity when carrying out the method.

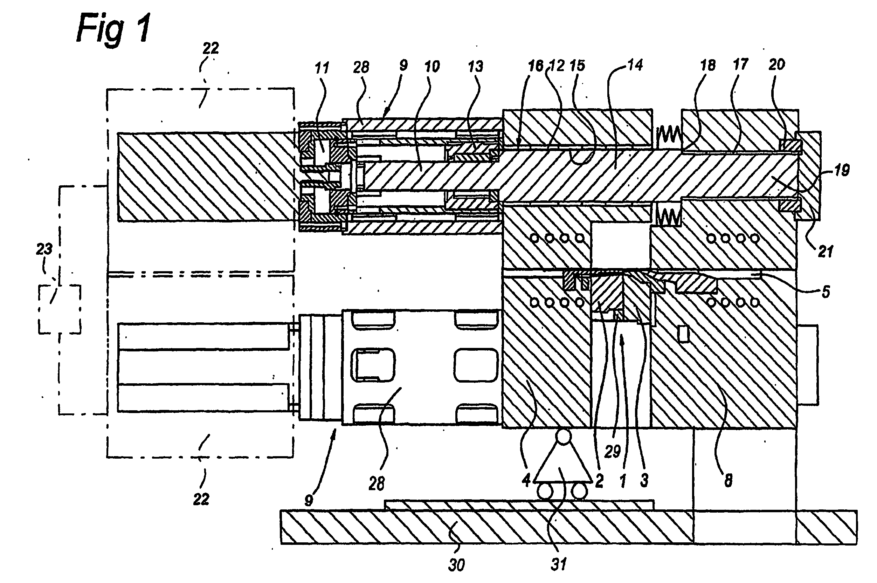

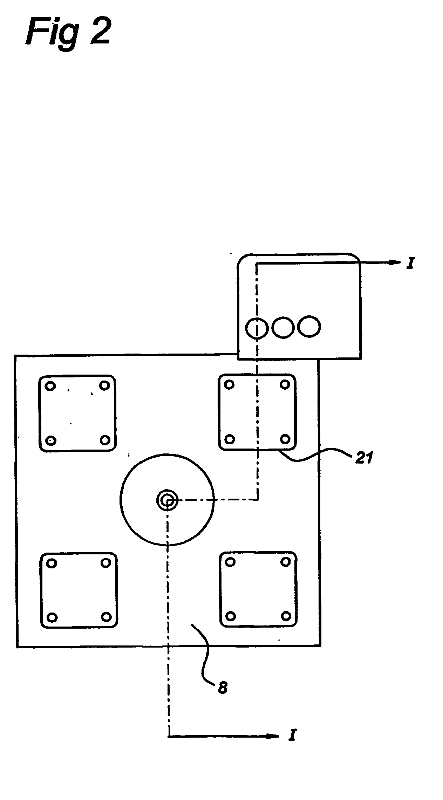

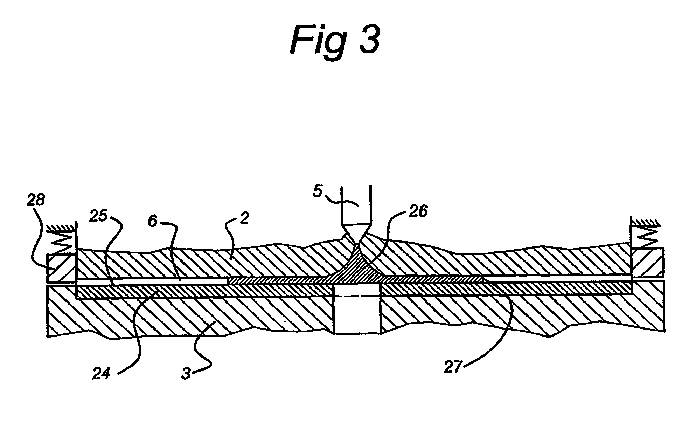

The installation according to the invention for injection moulding, for example, a CD or a DVD, which is shown in Figure 1 and Figure 2, contains a mould that comprises the mould parts 2 and 3 and is indicated in its entirety by 1. The mould is accommodated between the yoke 8 and the block indicated by 4, through which yoke 8 a feed channel 5 runs for feeding hot, molten plastic material via the mould half 3 into the mould cavity 6 between the mould parts 2, 3 (see Figure 3).

The mould part 3 is rigidly accommodated on the yoke 8, which, in turn is supported on the base 30. The other mould part 2 is accommodated on the block 4 that is movably supported on the base 30 by means of a carriage 31.

The air displaced during injection is able to escape by means of a resiliently compressed vent ring 29 that surrounds the mould part 2.

The ability of the block 4 to move is ensured by four screw actuators 9, two of which are shown in the section in Figure 1.

Each screw actuator 9 has a screw spindle 10, which is mounted, by means of bearing 11, on the sleeve 28 fixed to the block 4. Furthermore, each screw actuator 9 has a nut 13, each of which nuts 13 is fixed in a sleeve 28. The screw spindles 10 each make up one piece with a column 14 that runs through a bore 12 in the block 4. The columns 14 are each slideably accommodated in the bore 12 of the block 4 by means of a linear bearing 16.

The columns 14 are accommodated in the yoke 8 by means of the retaining sleeve 17 such that they fit tightly. In particular, the columns each have a shoulder 18 that is in contact with the retaining sleeve 17, whilst their narrowed section 19 adjoining the shoulder 18 is provided with a threaded end 20, on which a tensioning nut 21 engages in each case. The columns 14 can thus each be fixed to the yoke 8 under prestressing.

Each screw spindle 10 is connected at the end to a servomotor 22, which servomotors are controlled by the control device 23.

The screw actuators 9 can each be controlled by means of the control device 23 in such a way that the mould parts 2 and 3 are fixed relative to one another a specific distance apart. The mould parts 2, 3 are not clamped to one another in this position. By virtue of the rapid control action of the control device 23, the desired mutual position can, however, be maintained, despite the high pressure of the hot, molten plastic material fed into the mould cavity 6 via channel 5.

The screw actuators 9 can even be operated dynamically by the control device 23 when filling the mould cavity with the plastic material in order, if necessary, to compensate for the pressure and if necessary to move the mould parts 2, 3 a little further towards one another.

This can be useful especially when producing data carriers, in which a large number of miniscule pits, cavities and the like have to be made in the plastic surface.

As shown in Figure 3, a master disc 24 is accommodated in the mould cavity, a spiral pattern with projections being present on the surface 25 of said master disc 24 facing the mould cavity 6. As an alternative, however, a data carrier of a different shape, for example rectangular, can also be produced. The pattern can then consist of rows of pits and the like. Furthermore, other optical media, such as lenses, can also be produced.

When the plastic material 26 is injected via the channel 5 plastic material spreads through said mould cavity 6, as defined by the front 27.

The mould halves 2, 3 are held stable during this operation and can even be moved some distance apart if this is necessary in order to obtain the desired thickness of the mould cavity 6.

## Claims

1. Method for the injection moulding of a plastic article comprising the following steps:
- the provision of a mould (1) having at least two mould parts (2, 3) which can be moved with respect to one another,
- injecting a heated, fluid material (26) into the mould cavity under pressure,
**characterized by**
- the provision of positioning means (9, 22) for positioning the mould parts (2, 3) with respect to one another in a nominal mutual position such that a mould cavity (6) is obtained, which nominal mutual position is adjustable during or directly after injection, and
- the provision of a control device (23) influencing the positioning means (9, 22) by rapid control action in such a way that the desired nominal mutual position of the mould parts defming the mould cavity (6) is adjustably maintained as desired when injecting the material (26) into the mould cavity (6) under pressure or directly after injection,
- the provision of measurement means for measuring the thickness of an article, and
- the adjusting of the mutual spacing of the mould parts (2, 3) by means of the control device (3) on the basis of the thickness measurement.

2. Method according to claim 1, comprising the connection of the measurement means to the control device (23).

3. Method according to Claim 1 or 2, comprising adjusting the mutual spacing of the mould parts (2, 3) on the basis of the thickness dimensions, obtained by the measurement means, of at least one previously produced product.

4. Method according to Claim 1, 2 or 3, comprising adjusting the mutual spacing of the mould parts (2, 3) on the basis of the shape, obtained by the measurement means, of at least one previously produced product.

5. Method according to Claim 1, 2, 3 or 4, comprising influencing the positioning means as a function of the result of at least one thickness measurement of an article injection moulded in the previous cycle.

6. Method according to Claim 5, comprising measuring the thickness of the article in several locations.

7. Method according to Claim 6, comprising measuring the thickness of the article in at least a first set of locations that are located on a predetermined first line.

8. Method according to Claim 6 or 7, comprising measuring the thickness of the article in at least a second set of locations that are located on a predetermined second line that differs from the first line.

9. Method according to Claim 8, wherein the first and the second line are straight.

10. Method according to Claim 9, wherein the first and the second line run parallel to one another.

11. Method according to Claim 8, wherein the first and the second line intersect one another.

12. Method according to Claim 7 or 8, wherein the line is curved.

13. Method according to one of the preceding claims, comprising moving the mould parts (2, 3) a small distance towards one another during or following injection of the plastic material (26) into the mould cavity (6) under pressure, in order to compensate for shrinkage in the plastic material (26) during the cooling thereof.

14. Method according to Claim 13, for the injection moulding of an information carrier for a CD or DVD, comprising the provision of a mould (1), one mould part (3) of which contains a master disc (24) which contains a spiral series of projections or pits in order to form a corresponding series of depressions or elevations in the information carrier, comprising the step of moving the mould parts (2, 3) towards one another over a short distance, for example approximately 120 nm.

15. Method according to one of the preceding claims, comprising influencing the positioning means as a function of the dimensions of the master disc (24).

16. Installation for injection moulding of a plastic article by means of the method according to one of the preceding claims, comprising:
- a mould (1) having two mould parts which can be moved with respect to one another,
- injection means (5) for injecting the hot, molten plastic (26) into the mould cavity (6),
**characterized by**
- positioning means (9, 22) for positioning the mould parts (2, 3) with respect to one another in a nominal mutual position such that a mould cavity (6) is obtained, which nominal mutual position of the mould parts is adjustable during or directly after injection,
- a control device (23) for influencing the positioning means (9, 22) by rapid control action in such a way that the desired nominal mutual position of the mould parts (2, 3) defming the mould cavity (6) is adjustably maintained as desired when injecting the material (26) into the mould cavity (6) under pressure or directly after injection, and
- measurement means for measuring the thickness of an article, so as to adjust the mutual spacing of the mould parts (2, 3) by means of the control device (23) on the basis of said measurement.

17. Installation according to claim 16, wherein the measurement means are connected to the control device (23).

18. Installation according to claim 16 or 17, wherein the mutual spacing of the mould parts (2, 3) is adjusted on the basis of the thickness dimensions, obtained by the measurement means, of at least one previously produced product.

19. Installation according to claim 16, 17 or 18, wherein the mutual spacing of the mould parts (2, 3) is adjusted on the basis of the shape, obtained by the measurement means, of at least one previously produced product.

20. Installation according to Claim 16 or 17, wherein the measurement means are designed for contact-free measurement.

21. Installation according to Claim 18, 19 or 20, wherein the positioning means comprise screw actuators (9), each of which can be driven by means of its own motor (22).

22. Installation according to Claim 21, wherein each screw actuator (9) is connected to a column (14) and each column (14) is fixed to a yoke (8), a channel (5) for feeding hot, molten plastic (26) being located in the yoke (8).

23. Installation according to Claim 22, wherein each column (14) supports a block (4), which block comprises one of the mould parts (2):

24. Installation according to Claim 23, wherein the block (4) is movably supported on the colamns (14) by means of a linear bearing (16).

25. Installation according to Claim 23 or 24, wherein each screw actuator (9) has a screw spindle (10) connected to a column (14), and a nut (13) connected to a sleeve (28) which is connected to the block (4) in such a way that the mould part (2) in the block (4) can be moved towards and away from the other mould part (3) by operating the screw actuators (9).

26. Installation according to one of Claims 20 - 25, wherein one of the mould parts (2) is surrounded by a vent ring (29) that is resiliently pressed against the other mould part.

27. Installation according to one of Claims 21 - 26, wherein each motor (22) is a servomotor.

## Patentansprüche

1. Verfahren für das Spritzgießen eines Kunststoffgegenstands, das die folgenden Schritte aufweist:
- Bereitstellen einer Form (1), die mindestens zwei Formteile (2, 3) aufweist, die relativ zueinander bewegt werden können,
- Einspritzen eines erwärmten flüssigen Materials (26) in den Formenhohlraum unter Druck,
**gekennzeichnet durch**
- Bereitstellen von Positionierungseinrichtungen (9, 22) zum Positionieren der Formteile (2, 3) relativ zueinander in eine gegenseitige Nennposition, so daß ein Formenhohlraum (6) erhalten wird, wobei die gegenseitige Nennposition während oder direkt nach dem Einspritzen einstellbar ist, und
- Bereitstellen einer Steuervorrichtung (23), die die Positionierungseinrichtungen (9, 22) **durch** eine schnelle Steuerfunktion derart beeinflußt, daß die erwünschte gegenseitige Nennposition der Formteile, die den Formenhohlraum (6) definieren, beim Einspritzen des Materials (26) in den Formenhohlraum (6) unter Druck oder direkt nach dem Einspritzen, wie erwünscht, einstellbar aufrechterhalten wird,
- Bereitstellen von Meßeinrichtungen zum Messen der Dicke eines Gegenstands, und
- Einstellen des gegenseitigen Abstands der Formteile (2, 3) mittels der Steuervorrichtung (3) auf der Grundlage der Dickenmessung.

2. Verfahren nach Anspruch 1, wobei die Meßeinrichtungen mit der Steuervorrichtung (23) verbunden werden.

3. Verfahren nach Anspruch 1 oder 2, wobei der gegenseitige Abstand der Formteile (2,3) auf der Grundlage der durch die Meßeinrichtungen erhaltenen Dickenabmessungen mindestens eines vorhergehend hergestellten Produkts eingestellt wird.

4. Verfahren nach Anspruch 1, 2 oder 3, wobei der gegenseitige Abstand der Formteile (2, 3) auf der Grundlage der durch die Meßeinrichtungen erhaltenen Form mindestens eines vorhergehend hergestellten Produkts eingestellt wird.

5. Verfahren nach Anspruch 1, 2, 3 oder 4, wobei die Positionierungseinrichtungen als Funktion des Resultats mindestens einer Dickenmessung eines Gegenstands beeinflußt werden, der im vorhergehenden Arbeitszyklus spritzgegossen wurde.

6. Verfahren nach Anspruch 5, wobei die Dicke des Gegenstands an verschiedenen Stellen gemessen wird.

7. Verfahren nach Anspruch 6, wobei die Dicke des Gegenstands an mindestens einem ersten Satz von Stellen gemessen wird, die auf einer vorbestimmten ersten Linie angeordnet sind.

8. Verfahren nach Anspruch 6 oder 7, wobei die Dicke des Gegenstands an mindestens einem zweiten Satz von Stellen gemessen wird, die auf einer vorbestimmten zweiten Linie angeordnet sind, die sich von der ersten Linie unterscheidet.

9. Verfahren nach Anspruch 8, wobei die erste und die zweite Linie gerade sind.

10. Verfahren nach Anspruch 9, wobei die erste und die zweite Linie parallel zueinander verlaufen.

11. Verfahren nach Anspruch 8, wobei die erste und die zweite Linie einander schneiden.

12. Verfahren nach Anspruch 7 oder 8, wobei die Linie gekrümmt ist.

13. Verfahren nach einem der vorhergehenden Ansprüche, wobei die Formteile (2,3) über einen kurzen Abstand zueinander hin während oder anschließend an das Einspritzen des Kunststoffmaterials (26) in den Formenhohlraum (6), das unter Druck erfolgt, bewegt werden, um die Schrumpfung des Kunststoffmaterials (26) während dessen Abkühlung auszugleichen.

14. Verfahren nach Anspruch 13 zum Spritzgießen eines Informationsträgers für eine CD oder DVD, wobei eine Form (1) bereitgestellt wird, von der ein Formteil (3) eine Masterplatte (24) enthält, die eine spiralförmige Reihe von Vorsprüngen oder Grübchen enthält, um eine entsprechende Reihe von Vertiefungen oder Erhöhungen im Informationsträger zu bilden, und die Formteile (2, 3) zueinander hin über eine kurze Strecke von beispielsweise annähernd 120 nm bewegt werden.

15. Verfahren nach einem der vorhergehenden Ansprüche, wobei die Positionierungseinrichtungen als Funktion der Abmessungen der Masterplatte (24) beeinflußt werden.

16. Anlage zum Spritzgießen eines Kunststoffgegenstands mittels des Verfahrens nach einem der vorhergehenden Ansprüche mit:
- einer Form (1), die zwei Formteile aufweist, die relativ zueinander bewegbar sind,
- einer Einspritzeinrichtung (5) zum Einspritzen des heißen, geschmolzenen Kunststoffs (26) in den Formenhohlraum (6),
**gekennzeichnet durch**
- Positionierungseinrichtungen (9, 22) zum Positionieren der Formteile (2, 3) relativ zueinander in einer gegenseitigen Nennposition, so daß ein Formenhohlraum (6) erhalten wird, wobei die gegenseitige Nennposition der Formteile während oder direkt nach dem Einspritzen einstellbar ist,
- eine Steuervorrichtung (23) zum Beeinflussen der Positionierungseinrichtungen (9, 22) **durch** eine schnelle Steuerfunktion derart, daß die erwünschte gegenseitige Nennposition der Formteile (2, 3), die den Formenhohlraum (6) definieren, beim Einspritzen des Materials (26) in den Formenhohlraum (6) unter Druck oder direkt nach dem Einspritzen, wie erwünscht, einstellbar aufrechterhalten wird, und
- Meßeinrichtungen zum Messen der Dicke eines Gegenstands, um den gegenseitigen Abstand der Formteile (2, 3) mittels der Steuervorrichtung (23) auf der Grundlage der Messung einzustellen.

17. Anlage nach Anspruch 16, wobei die Meßeinrichtungen mit der Steuervorrichtung (23) verbunden sind.

18. Anlage nach Anspruch 16 oder 17, wobei der gegenseitige Abstand der Formteile (2, 3) auf der Grundlage der durch die Meßeinrichtungen erhaltenen Dickenabmessungen mindestens eines vorhergehend hergestellten Produkts eingestellt wird.

19. Anlage nach Anspruch 16, 17 oder 18, wobei der gegenseitige Abstand der Formteile (2, 3) auf der Grundlage der durch die Meßeinrichtungen erhaltenen Form, mindestens eines vorhergehend hergestellten Produkts eingestellt wird.

20. Anlage nach Anspruch 16 oder 17, wobei die Meßeinrichtungen für eine berührungslose Messung eingerichtet sind.

21. Anlage nach Anspruch 18, 19 oder 20, wobei die Positionierungseinrichtungen Schraubenstellglieder (9) aufweisen, von denen jedes mittels seines eigenen Motors (22) angetrieben werden kann.

22. Anlage nach Anspruch 21, wobei jedes Schraubenstellglied (9) mit einer Säule (14) verbunden ist und jede Säule (14) an einem Joch (8) befestigt ist, wobei ein Kanal (5) zum Zuführen eines heißen, geschmolzenen Kunststoffs (26) im Joch (8) angeordnet ist.

23. Anlage nach Anspruch 22, wobei jede Säule (14) einen Block (4) hält, der eines der Formteile (2) aufweist.

24. Anlage nach Anspruch 23, wobei der Block (4) mittels eines Linearlagers (16) beweglich auf den Säulen (14) gehalten wird.

25. Anlage nach Anspruch 23 oder 24, wobei jedes Schraubenstellglied (9) eine Schraubenspindel (10), die mit einer Säule (14) verbunden ist, und eine Mutter (13) aufweist, die mit einer Buchse (29) verbunden ist, die mit dem Block (4) derart verbunden ist, daß das Formteil (2) im Block (4) zum anderen Formteil (3) hin und von ihm weg bewegt werden kann, indem die Schraubenstellglieder (9) betätigt werden.

26. Anlage nach einem der Ansprüche 20 bis 25, wobei eines der Formteile (2) von einem Entlüftungsring (29) umgeben ist, der elastisch gegen das andere Formteil gepreßt wird.

27. Anlage nach einem der Ansprüche 21 bis 26, wobei jeder Motor (22) ein Servomotor ist.

## Revendications

1. Procédé pour le moulage par injection d'un article de plastique, **caractérisé en ce qu'**il comprend les étapes suivantes consistant à :
- fournir un moule (1) ayant au moins deux pièces de moule (2, 3) qui peuvent être déplacées l'une par rapport à l'autre,
- injecter un matériau fluide, chauffé (26) dans la cavité de moule sous pression,
**caractérisé par**
- la fourniture de moyens de positionnement (9, 22) pour positionner les pièces de moule (2, 3) l'une par rapport à l'autre dans une position mutuelle nominale telle qu'une cavité de moule (6) est obtenue, laquelle position mutuelle nominale est ajustable pendant ou directement après l'injection, et
- la fourniture d'un dispositif de contrôle (23) influençant les moyens de positionnement (9, 22) par une action de contrôle rapide de telle manière que la position mutuelle nominale souhaitée des pièces de moule définissant la cavité de moule (6) est maintenue de manière ajustable comme il est souhaité pendant l'injection du matériau (26) dans la cavité de moule (6) sous pression ou directement après l'injection,
- la fourniture de moyens de mesurage pour mesurer l'épaisseur d'un article, et
- l'ajustement de l'espacement mutuel des pièces de moule (2, 3) au moyen du dispositif de contrôle (3) sur la base du mesurage de l'épaisseur.

2. Procédé selon la revendication 1, **caractérisé en ce qu'**il comprend le raccordement des moyens de mesurage au dispositif de contrôle (23).

3. Procédé selon la revendication 1 ou 2, **caractérisé en ce qu'**il comprend l'ajustement de l'espacement mutuel des pièces de moule (2, 3) sur la base des dimensions d'épaisseur, obtenues par les moyens de mesurage, d'au moins un produit produit auparavant.

4. Procédé selon la revendication 1, 2 ou 3, **caractérisé en ce qu'**il comprend l'ajustement de l'espacement mutuel des pièces de moule (2, 3) sur la base de la forme, obtenue par les moyens de mesurage, d'au moins un produit réalisé auparavant.

5. Procédé selon la revendication 1, 2, 3 ou 4, **caractérisé en ce qu'**il comprend l'influence des moyens de positionnement comme une fonction du résultat d'au moins un mesurage d'épaisseur d'un article moulé par injection dans le cycle précédent.

6. Procédé selon la revendication 5, **caractérisé en ce qu'**il comprend le mesurage de l'épaisseur de l'article en plusieurs emplacements.

7. Procédé selon la revendication 6, **caractérisé en ce qu'**il comprend le mesurage de l'épaisseur de l'article dans au moins une première série d'emplacements qui sont situés sur une première ligne prédéterminée.

8. Procédé selon la revendication 6 ou 7, **caractérisé en ce qu'**il comprend le mesurage de l'épaisseur de l'article dans au moins une seconde série d'emplacements qui sont situés sur une seconde ligne prédéterminée qui diffère de la première ligne.

9. Procédé selon la revendication 8, **caractérisé en ce que** la première et la seconde lignes sont droites.

10. Procédé selon la revendication 9, **caractérisé en ce que** la première et la seconde lignes sont parallèles l'une par rapport à l'autre.

11. Procédé selon la revendication 8, **caractérisé en ce que** la première et la seconde lignes se coupent.

12. Procédé selon la revendication 7 ou 8, **caractérisé en ce que** la ligne est courbée.

13. Procédé selon l'une quelconque des revendications précédentes, **caractérisé en ce qu'**il comprend le déplacement des pièces de moule (2, 3) sur une petite distance l'une vers l'autre pendant ou suivant l'injection du matériau de plastique (26) dans la cavité de moule (6) sous pression, de manière à compenser le rétrécissement dans le matériau de plastique (26) pendant le refroidissement de celui-ci.

14. Procédé selon la revendication 13, pour le moulage par injection d'un support d'informations pour un CD ou DVD, **caractérisé en ce qu'**il comprend la provision d'un moule (1), duquel une pièce de moule (3) contient un disque maître (24) qui contient une série en spirale de projections ou trous de manière à former une série correspondante de dépressions ou d'élévations dans le support d'informations, comprenant l'étape consistant à déplacer les pièces de moule (2, 3) l'une vers l'autre sur une distance courte, par exemple approximativement 120 nm.

15. Procédé selon l'une quelconque des revendications précédentes, **caractérisé en ce qu'**il comprend l'influence des moyens de positionnement comme une fonction des dimensions du disque maître (24).

16. Installation pour le moulage par injection d'un article de plastique au moyen du procédé selon l'une quelconque des revendications précédentes, **caractérisée en ce qu'**elle comprend :
- un moule (1) ayant deux pièces de moule qui peuvent être déplacées l'une par rapport à l'autre,
- des moyens d'injection (5) pour injecter le plastique fondu, chaud (26) dans la cavité de moule (6),
**caractérisée par**
- des moyens de positionnement (9, 22) pour positionner les pièces de moule (2, 3) l'une par rapport à l'autre dans une position mutuelle nominale telle qu'une cavité de moule (6) est obtenue, laquelle position mutuelle nominale des pièces de moule est ajustable pendant ou directement après l'injection,
- un dispositif de contrôle (23) pour influencer les moyens de positionnement (9, 22) par une action de contrôle rapide de telle manière que la position mutuelle nominale souhaitée des pièces de moule (2, 3) définissant la cavité de moule (6) est maintenue de manière ajustable comme il est souhaité pendant l'injection du matériau (26) dans la cavité de moule (6) sous pression ou directement après l'injection, et
- des moyens de mesurage pour mesurer l'épaisseur d'un article, de manière à ajuster l'espacement mutuel des pièces de moule (2, 3) au moyen du dispositif de contrôle (23) sur la base dudit mesurage.

17. Installation selon la revendication 16, **caractérisée en ce que** les moyens de mesurage sont raccordés au dispositif de contrôle (23).

18. Installation selon la revendication 16 ou 17, **caractérisée en ce que** l'espacement mutuel des pièces de moule (2, 3) est obtenu sur la base des dimensions d'épaisseur, obtenues par les moyens de mesurage, d'au moins un produit réalisé auparavant.

19. Installation selon la revendication 16, 17 ou 18, **caractérisée en ce que** l'espacement mutuel des pièces de moule (2, 3) est ajusté sur la base de la forme, obtenue par les moyens de mesurage, d'au moins un produit réalisé auparavant.

20. Installation selon la revendication 16 ou 17, **caractérisée en ce que** les moyens de mesurage sont conçus pour un mesurage sans contact.

21. Installation selon la revendication 18, 19 ou 20, **caractérisée en ce que** les moyens de positionnement comprennent des activateurs de vis (9), chacun d'eux pouvant être mené au moyen de son propre moteur (22).

22. Installation selon la revendication 21, **caractérisée en ce** chaque activateur de vis (9) est raccordé à une colonne (14) et chaque colonne (14) est fixée sur un joug (8), un conduit (5) pour amener le plastique fondu chaud (26) étant situé dans le joug (8).

23. Installation selon la revendication 22, **caractérisée en ce que** chaque colonne (14) supporte un bloc (4), lequel bloc comprend une des pièces de moule (2).

24. Installation selon la revendication 23, **caractérisée en ce que** le bloc (4) est supporté de façon mobile sur les colonnes (14) au moyen d'un palier linéaire (16).

25. Installation selon la revendication 23 ou 24, **caractérisée en ce que** chaque activateur de vis (9) a une tige de vis (10) raccordée à une colonne (14), et un écrou (13) raccordé à une manche (29) qui est raccordée au bloc (4) de telle manière que la pièce de moule (2) dans le bloc (4) peut être rapprochée ou éloignée de l'autre pièce de moule (3) en actionnant les activateurs de vis (9).

26. Installation selon l'une quelconque des revendications 20 à 25, **caractérisée en ce qu'**une des pièces de moule (2) est entourée par un anneau de ventilation (28) qui est appuyé de manière résiliente contre l'autre pièce de moule.

27. Installation selon l'une quelconque des revendications 21 à 26, **caractérisée en ce que** chaque moteur (22) est un servomoteur.
